# EUROPEAN PATENT APPLICATION

(11) **EP 4 783 272 A1**
(43) Date of publication of application: **29.07.2026**
(21) Application number: 25220413.6
(22) Date of filing: 03.12.2025
(51) Int. Cl.: H01M 8/248, C25B 9/75

(54) **TIE ROD SPRING ASSEMBLY FOR AN ELECTROCHEMICAL SYSTEM**

(30) Priority: 22.01.2025 US 202563748250 P
(71) Applicant: New Hydrogen IP, LLC, Columbus, Indiana 47201 (US)
(72) Inventor: GARCIA-TORRESOLA, Enrique, Summerville, 29486 (US); CECIL, Adam C., Columbus, 47201 (US)
(74) Representative: Marks & Clerk Cummins

(57) **Abstract**

An electrochemical system includes an electrochemical stack, a top endplate, a bottom endplate, and a tie rod spring assembly. The electrochemical stack is arranged between the top endplate and the bottom endplate. The tie rod spring assembly is configured to allow one or more components of the electrochemical stack to expand during use of the electrochemical stack. The tie rod spring assembly includes a housing extending between the bottom endplate and the top endplate, a washer stack arranged within the housing, and a plunger extending through the washer stack and configured to compress the washer stack within the housing in response to movement of the top endplate away from the bottom endplate.

## Description

### CROSS-REFERENCE TO RELATED APPLICATIONS

This nonprovisional application claims the benefit and priority, under 35 U.S.C. § 119(e) and any other applicable laws or statutes, to U.S. Provisional Patent Application Serial No. 63/748,250 filed on January 22, 2025, the entire disclosure of which is hereby expressly incorporated herein by reference.

### TECHNICAL FIELD

The present disclosure relates to a tie rod spring assembly for an electrochemical system and methods of using the same.

### SUMMARY

Embodiments of the present disclosure are included to meet these and other needs.

In one aspect described herein, an electrochemical system comprises an electrochemical stack, a top endplate, a bottom endplate, and a tie rod spring assembly. The electrochemical stack includes a plurality of cells. Each of the plurality of cells includes a membrane. The top endplate is arranged on a first side of the electrochemical stack. The bottom endplate is arranged on a second side of the electrochemical stack opposite the first side. The tie rod spring assembly is configured to allow the membrane of each of the plurality of cells to expand during use of the electrochemical stack. The tie rod spring assembly includes a housing extending between the bottom endplate and the top endplate, a washer stack arranged within the housing, and a plunger extending through the washer stack and configured to compress the washer stack within the housing in response to movement of the top endplate away from the bottom endplate due to the membrane of one or more of the plurality of cells expanding.

In some embodiments, the washer stack may be located entirely between the top endplate and the bottom endplate. In some embodiments, the washer stack may include a plurality of disc spring washers. In some embodiments, the housing may be fixed to the bottom endplate such that the housing remains stationary relative to the top endplate. In some embodiments, the plunger may be configured to move with the top endplate relative to the bottom endplate. In some embodiments, the plunger may include a stem that extends through the washer stack and a flange coupled to a terminal end of the stem and located within the housing.

In some embodiments, the flange may be located below the washer stack to engage a lower surface of the washer stack. In some embodiments, the tie rod spring assembly may further include a washer stack retainer located within the housing above the washer stack to engage an upper surface of the washer stack opposite the lower surface. In some embodiments, the flange of the plunger may apply a compressive force to the washer stack in response to the plunger moving with the top endplate relative to the bottom endplate.

In some embodiments, the washer stack retainer may be fixed to the housing. In some embodiments, the stem of the plunger may include a first portion coupled to the flange and a second portion coupled to the first portion to locate the first portion between the flange and the second portion. In some embodiments, the first portion may extend through the washer stack and the washer stack retainer, and the second portion may extend outwardly beyond the housing to couple with the top endplate. In some embodiments, the tie rod spring assembly may further include an insulative sleeve extending around the housing.

According to a second aspect, described herein, a method includes arranging an electrochemical stack between a top endplate and a bottom endplate. The method includes inserting a plunger of a tie rod spring assembly through a washer stack of the tie rod spring assembly. The method includes positioning the washer stack and the plunger within a housing of the tie rod spring assembly. The method includes arranging the tie rod spring assembly between the top endplate and the bottom endplate. The method includes moving the top endplate away from the bottom plate in response to expansion of one or more components of the electrochemical stack. The method includes compressing the washer stack within the housing in response to movement of the top endplate.

In some embodiments, the washer stack may be located entirely between the top endplate and the bottom endplate. In some embodiments, the method may further comprise fixing the housing to the bottom endplate. In some embodiments, the step of moving the top endplate may include moving the plunger with the top endplate relative to the bottom endplate. In some embodiments, the plunger may include a stem that extends through the washer stack and a flange coupled to a terminal end of the stem and located within the housing.

In some embodiments, the method may further comprise locating the flange of the plunger below a lower surface of the washer stack and applying a compressive force to the lower surface of the washer stack via the flange in response to the movement of the plunger. In some embodiments, the method may further comprise fixing the stem of the plunger to the top endplate. In some embodiments, the method may further comprise fixing a washer stack retainer to the housing above the washer stack. In some embodiments, the method may further comprise inserting the housing into an insulative sleeve. In some embodiments, the washer stack may include a plurality of disc spring washers.

### BRIEF DESCRIPTION OF THE DRAWINGS

FIG. 1A is a schematic view of an exemplary fuel cell system including an air delivery system, a hydrogen delivery system, and a fuel cell module including a stack of multiple fuel cells;
FIG. 1B is a cutaway view of an exemplary fuel cell system including an air delivery system, hydrogen delivery systems, and a plurality of fuel cell modules each including multiple fuel cell stacks;
FIG. 1C is a perspective view of an exemplary repeating unit of a fuel cell stack of the fuel cell system of FIG. 1A;
FIG. 1D is a cross-sectional view of an exemplary repeating unit of the fuel cell stack of FIG. 1C;
FIG. 2A is perspective view of an electrolyzer cell stack according to the present disclosure;
FIG. 2B is a schematic view of an electrolysis system configured to utilize the electrolyzer cell stack of FIG. 2A;
FIG. 2C is a schematic view of an additional portion of the electrolysis system of FIG. 2B;
FIG. 3 is a perspective view of an electrochemical system including a top endplate, a bottom endplate spaced apart from the top endplate, an electrochemical stack arranged between the top endplate and the bottom endplate, and a tie rod spring assembly extending between the top endplate and the bottom endplate and configured to allow for expansion of components of the electrochemical stack;
FIG. 4 is cross-sectional view of the tie rod spring assembly of FIG. 3 showing that the tie rod spring assembly includes a housing, a washer stack located within the housing, and a plunger extending through the washer stack and configured to move to compress the washer stack within the housing;
FIG. 5 is an exploded view of the tie rod spring assembly of FIG. 4 showing, from bottom to top, the housing, the plunger, the washer stack, and a washer stack retainer;
FIG. 6 is an exploded view of a portion of the electrochemical assembly of FIG. 3 showing that the top endplate includes an upper crown configured to be coupled with the tie rod spring assembly and a lower cap coupled to the upper crown and the electrochemical stack;
FIG. 7 is a perspective view of the electrochemical assembly of FIG. 3 without the tie rod spring assembly;
FIG. 8 is a perspective view of another electrochemical system including a top endplate, a bottom endplate spaced apart from the top endplate, an electrochemical stack arranged between the top endplate and the bottom endplate, and a tie rod spring assembly extending between the top endplate and the bottom endplate and configured to allow for expansion of components of the electrochemical stack;
FIG. 9 is an exploded view of a portion of the electrochemical assembly of FIG. 8 showing that the top endplate includes an upper crown configured to be coupled with the tie rod spring assembly and a lower cap coupled to the upper crown and the electrochemical stack; and
FIG. 10 is a perspective view of the electrochemical assembly of FIG. 8 without the tie rod spring assembly.

### DETAILED DESCRIPTION

Fuel cell systems are known for their efficient use of fuel to produce direct current electric energy to power mobile applications, such as, for example, vehicles, trains, buses, and trucks. Electrolyzer systems are known for their efficient use of water and electricity to produce hydrogen and oxygen. Typical fuel cell systems and electrolyzer systems include endplates on either end of a fuel cell stack or an electrolyzer stack to compress cells within each stack.

Cells of each type of stack include a membrane that is exposed to heat. With this exposure, the membrane expands. It may be advantageous to allow for this expansion of the membrane. The present disclosure is directed to a tie rod spring assembly and methods of using the same that allow for expansion of membranes in electrochemical stacks.

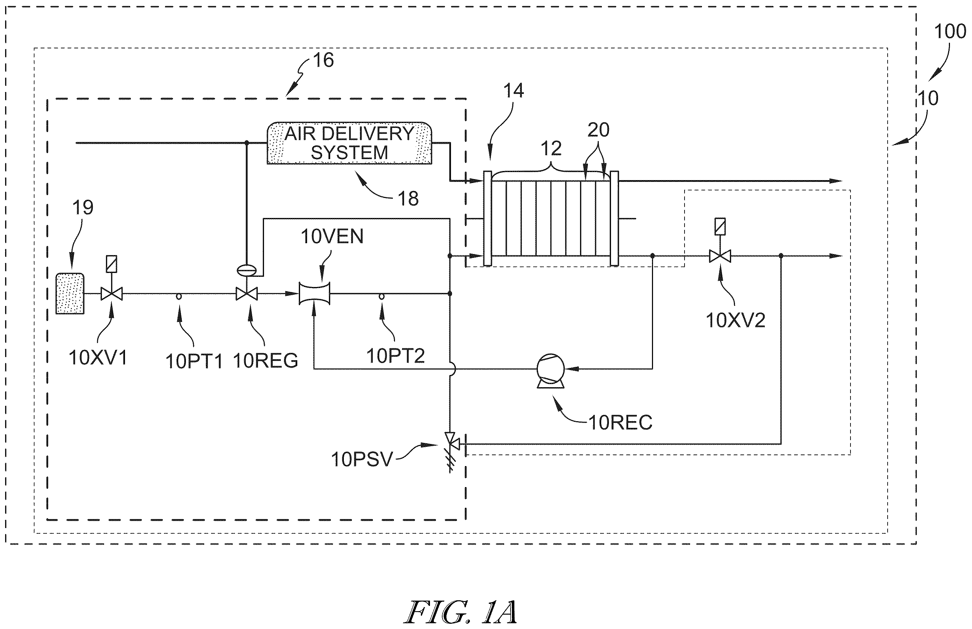

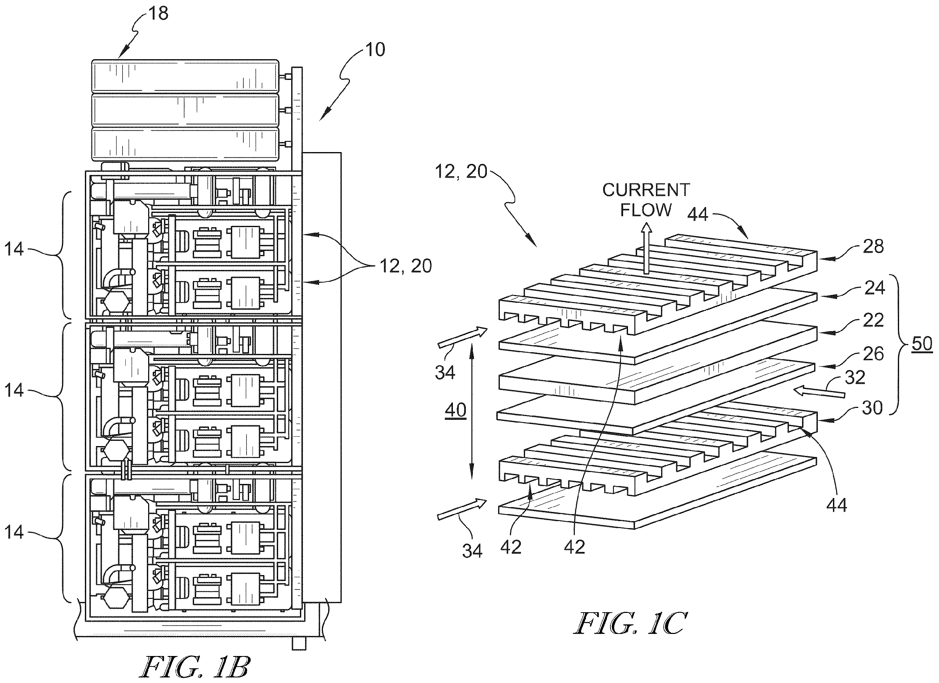

As shown in FIG. 1A, fuel cell systems 10 often include one or more fuel cell stacks 12 or fuel cell modules 14 connected to a balance of plant (BOP) 16, including various components, to support the electrochemical conversion, generation, and/or distribution of electrical power to help meet modern day industrial and commercial needs in an environmentally friendly way. As shown in FIGS. 1B and 1C, fuel cell systems 10 may include fuel cell stacks 12 comprising a plurality of individual fuel cells 20. Each fuel cell stack 12 may house a plurality of fuel cells 20 assembled together in series and/or in parallel. The fuel cell system 10 may include one or more fuel cell modules 14, as shown in FIGS. 1A and 1B. In some embodiments, the fuel cell system 10 may comprise one or more fuel cell stacks 12.

Each fuel cell module 14 may include a plurality of fuel cell stacks 12 and/or a plurality of fuel cells 20. The fuel cell module 14 may also include a suitable combination of associated structural elements, mechanical systems, hardware, firmware, and/or software that is employed to support the function and operation of the fuel cell module 14. Such items include, without limitation, piping, sensors, regulators, current collectors, seals, and insulators.

The fuel cells 20 in the fuel cell stacks 12 may be stacked together to multiply and increase the voltage output of a single fuel cell stack 12. The number of fuel cell stacks 12 in a fuel cell system 10 can vary depending on the amount of power required to operate the fuel cell system 10 and meet the power need of any load. The number of fuel cells 20 in a fuel cell stack 12 can vary depending on the amount of power required to operate the fuel cell system 10 including the fuel cell stacks 12.

The number of fuel cells 20 in each fuel cell stack 12 or fuel cell system 10 can be any number. For example, the number of fuel cells 20 in each fuel cell stack 12 may range from about 100 fuel cells to about 1000 fuel cells, including any specific number or range of number of fuel cells 20 comprised therein (e.g., about 200 to about 800). In an embodiment, the fuel cell system 10 may include about 20 to about 1000 fuel cells stacks 12, including any specific number or range of number of fuel cell stacks 12 comprised therein (e.g., about 200 to about 800). The fuel cells 20 in the fuel cell stacks 12 within the fuel cell module 14 may be oriented in any direction to optimize the operational efficiency and functionality of the fuel cell system 10.

The fuel cells 20 in the fuel cell stacks 12 may be any type of fuel cell 20. The fuel cell 20 may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an exemplary embodiment, the fuel cells 20 may be a polymer electrolyte membrane or proton exchange membrane (PEM) fuel cell or a solid oxide fuel cell (SOFC).

In an embodiment shown in FIG. 1C, the fuel cell stack 12 includes a plurality of proton exchange membrane (PEM) fuel cells 20. Each fuel cell 20 includes a single membrane electrode assembly (MEA) 22 and gas diffusion layers (GDL) 24, 26 on either or both sides of the membrane electrode assembly (MEA) 22 (see FIG. 1C). The fuel cell 20 further includes a bipolar plate (BPP) 28, 30 on the external side of each gas diffusion layer (GDL) 24, 26, as shown in FIG. 1C. The above-mentioned components, in particular the bipolar plate 30, the gas diffusion layer (GDL) 26, the membrane electrode assembly (MEA) 22, and the gas diffusion layer (GDL) 24 comprise a single repeating unit 50.

The bipolar plates (BPP) 28, 30 are responsible for the transport of reactants, such as fuel 32 (e.g., hydrogen) or oxidant 34 (e.g., oxygen, air), and cooling liquid 36 (e.g., coolant and/or water) in a fuel cell 20. The bipolar plates (BPP) 28, 30 can uniformly distribute reactants 32, 34 to an active area 40 of each fuel cell 20 through oxidant flow fields 42 and/or fuel flow fields 44 formed on outer surfaces of the bipolar plates (BPP) 28, 30. The active area 40, where the electrochemical reactions occur to generate electrical power produced by the fuel cell 20, is centered, when viewing the stack 12 from a top-down perspective, within the membrane electrode assembly (MEA) 22, the gas diffusion layers (GDL) 24, 26, and the bipolar plate (BPP) 28, 30.

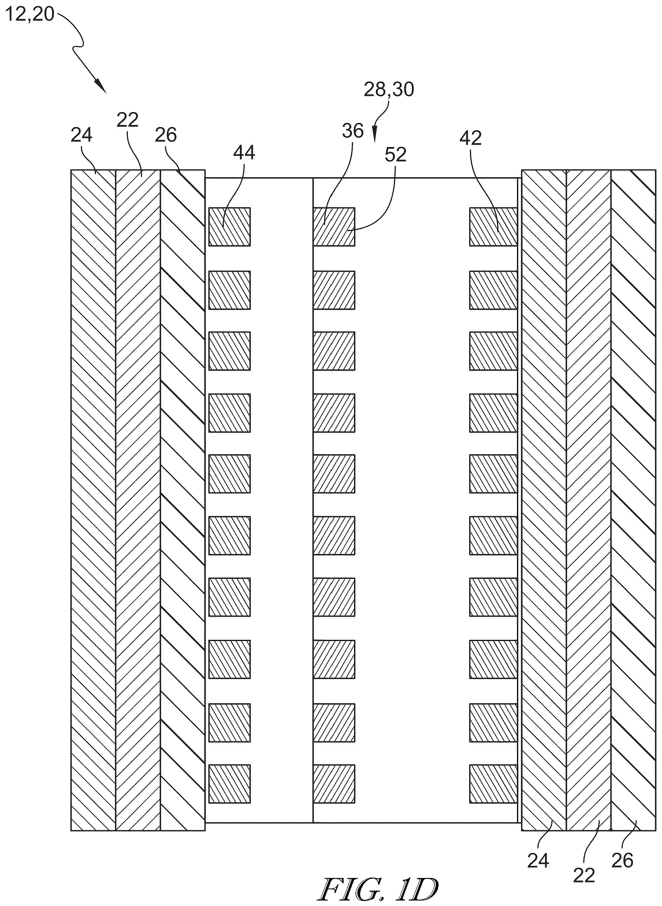

The bipolar plates (BPP) 28, 30 may each be formed to have reactant flow fields 42, 44 formed on opposing outer surfaces of the bipolar plate (BPP) 28, 30 and formed to have coolant flow fields 52 located within the bipolar plate (BPP) 28, 30, as shown in FIG. 1D. For example, the bipolar plate (BPP) 28, 30 can include fuel flow fields 44 for transfer of fuel 32 on one side of the plate 28, 30 for interaction with the gas diffusion layer (GDL) 26. The bipolar plate (BPP) 28, 30 also includes oxidant flow fields 42 for transfer of oxidant 34 on the second, opposite side of the plate 28, 30 for interaction with the gas diffusion layer (GDL) 24.

As shown in FIG. 1D, the bipolar plates (BPP) 28, 30 can further include coolant flow fields 52 formed within the plate (BPP) 28, 30, generally centrally between the opposing outer surfaces of the plate (BPP) 28, 30. The coolant flow fields 52 facilitate the flow of cooling liquid 36 through the bipolar plate (BPP) 28, 30 in order to regulate the temperature of the plate (BPP) 28, 30 materials and the reactants. The bipolar plates (BPP) 28, 30 are compressed against adjacent gas diffusion layers (GDL) 24, 26 to isolate and/or seal one or more reactants 32, 34 within their respective pathways 44, 42 to maintain electrical conductivity, which is required for robust operation of the fuel cell 20 (see FIGS. 1C and 1D).

The fuel cell system 10 described herein may be used in stationary and/or immovable power systems, such as industrial applications and power generation plants. The fuel cell system 10 may also be implemented in conjunction with an air delivery system 18. Additionally, the fuel cell system 10 may also be implemented in conjunction with a hydrogen delivery system and/or a source of hydrogen 19 such as a pressurized tank, including a gaseous pressurized tank, cryogenic liquid storage tank, chemical storage, physical storage, stationary storage, an electrolysis system or an electrolyzer. In one embodiment, the fuel cell system 10 is connected and/or attached in series or parallel to a hydrogen delivery system and/or a source of hydrogen 19, such as one or more hydrogen delivery systems and/or sources of hydrogen 19 in the BOP 16 (see FIG. 1A). In another embodiment, the fuel cell system 10 is not connected and/or attached in series or parallel to a hydrogen delivery system and/or a source of hydrogen 19.

In some embodiments, the fuel cell system 10 may include an on/off valve 10XV1, a pressure transducer 10PT1, a mechanical regulator 10REG, and a venturi 10VEN arranged in operable communication with each other and downstream of the hydrogen delivery system and/or source of hydrogen 19, as shown in FIG. 1A. The pressure transducer 10PT1 may be arranged between the on/off valve 10XV1 and the mechanical regulator 10REG. In some embodiments, a proportional control valve may be utilized instead of a mechanical regulator 10REG. In some embodiments, a second pressure transducer 10PT2 is arranged downstream of the venturi 10VEN, which is downstream of the mechanical regulator 10REG.

In some embodiments, the fuel cell system 10 may further include a recirculation pump 10REC downstream of the stack 12 and operably connected to the venturi 10VEN, as shown in FIG. 1A. The fuel cell system 10 may also include a further on/off valve 10XV2 downstream of the stack 12, and a pressure transfer valve 10PSV, as shown in FIG. 1A.

The present fuel cell system 10 may also be comprised in mobile applications. In an exemplary embodiment, the fuel cell system 10 is in a vehicle and/or a powertrain 100. A vehicle 100 comprising the present fuel cell system 10 may be an automobile, a pass car, a bus, a truck, a train, a locomotive, an aircraft, a light duty vehicle, a medium duty vehicle, or a heavy-duty vehicle. Types of vehicles 100 can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain 100 may be used on roadways, highways, railways, airways, and/or waterways. The vehicle 100 may be used in applications including but not limited to off highway transit, bobtails, and/or mining equipment. For example, an exemplary embodiment of mining equipment vehicle 100 is a mining truck or a mine haul truck.

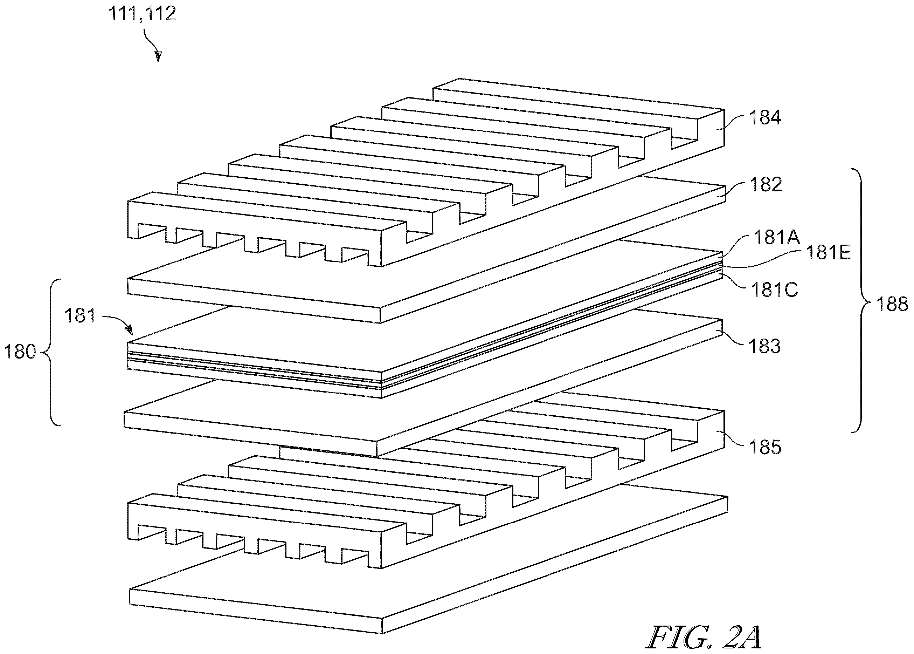

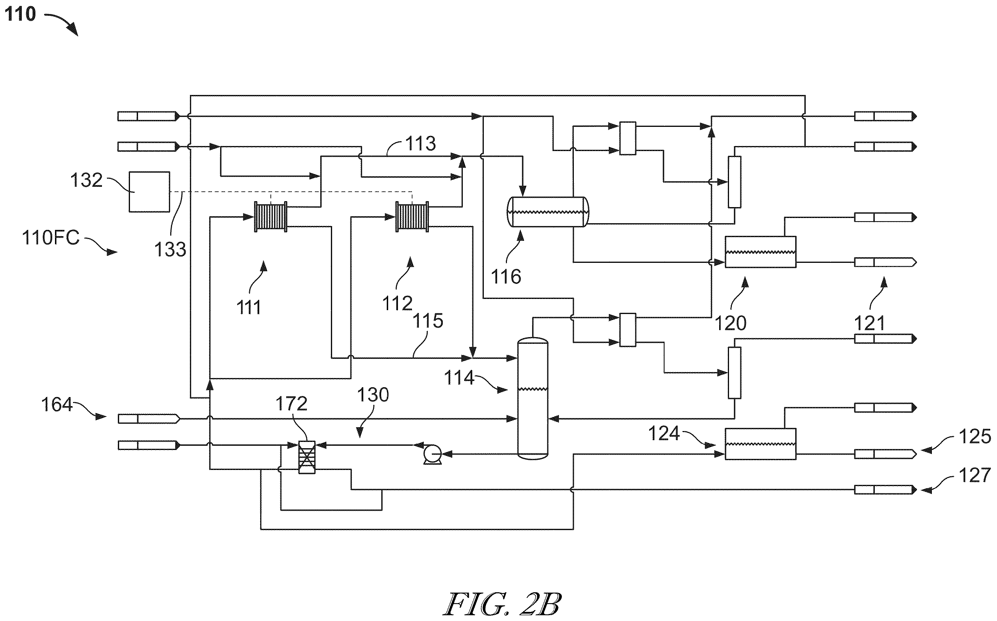

As shown in FIGS. 2A and 2B, electrolysis systems 110 are typically configured to utilize water and electricity to produce hydrogen and oxygen. An electrolysis system 110 typically includes one or more electrolyzer cells 180 that utilize electricity to chemically produce substantially pure hydrogen 113 and oxygen 115 from deionized water 130. Often the electrical source for the electrolysis systems 110 is produced from power or energy generation systems, including renewable energy systems such as wind, solar, hydroelectric, and geothermal sources for the production of green hydrogen. In turn, the pure hydrogen produced by the electrolysis systems 110 is often utilized as a fuel or energy source for those same power generation systems, such as fuel cell systems. Alternatively, the pure hydrogen produced by the electrolysis systems 110 may be stored for later use.

The typical electrolyzer cell 180, or electrolytic cell, is comprised of multiple assemblies compressed and bound into a single assembly, and multiple electrolyzer cells 180 may be stacked relative to each other, along with bipolar plates (BPP) 184, 185 therebetween, to form an electrolyzer cell stack (for example, electrolyzer cell stacks 111, 112 in FIG. 2B). Each electrolyzer cell stack 111, 112 may house a plurality of electrolyzer cells 180 connected together in series and/or in parallel. The number of electrolyzer cell stacks 111, 112 in the electrolysis systems 110 can vary depending on the amount of power required to meet the power need of any load (e.g., fuel cell stack). The number of electrolyzer cells 180 in an electrolyzer cell stack 111, 112 can vary depending on the amount of power required to operate the electrolysis systems 110 including the electrolyzer cell stack 111, 112.

An electrolyzer cell 180 includes a multi-component membrane electrode assembly (MEA) 181 that has an electrolyte 181E, an anode 181A, and a cathode 181C. Typically, the anode 181A, cathode 181C, and electrolyte 181E of the membrane electrode assembly (MEA) 181 are configured in a multi-layer arrangement that enables the electrochemical reaction to produce hydrogen and/or oxygen via contact of the water with one or more gas diffusion layers 182, 183. The gas diffusion layers (GDL) 182, 183, which may also be referred to as porous transport layers (PTL), are typically located on one or both sides of the MEA 181. Bipolar plates (BPP) 184, 185 often reside on either side of the GDLs and separate the individual electrolyzer cells 180 of the electrolyzer cell stack 111, 112 from one another. One bipolar plate 185 and the adjacent gas diffusion layers 182, 183 and MEA 181 can form a repeating unit 188.

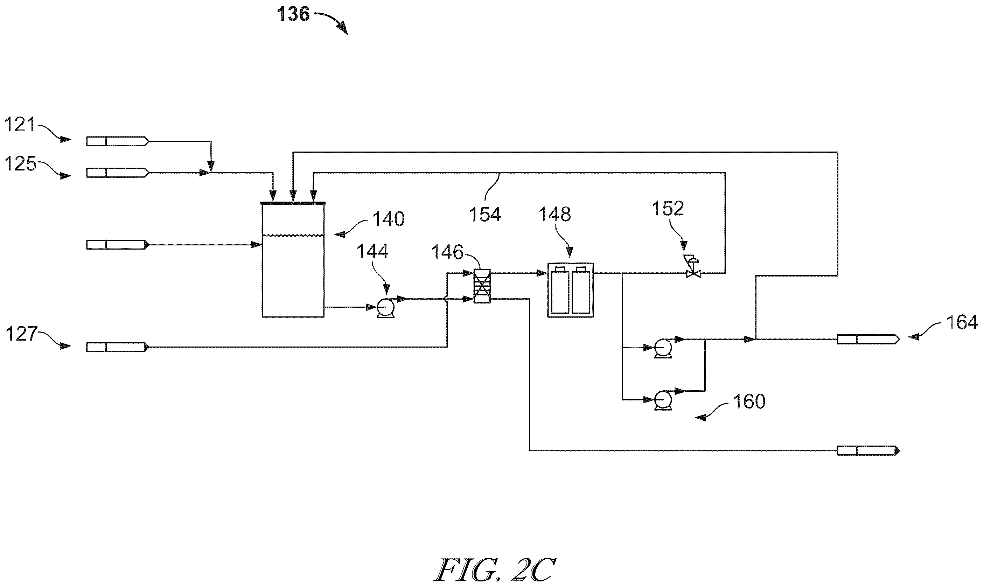

As shown in FIGS. 2B and 2C, an exemplary electrolysis system 110 can include two electrolyzer cell stacks 111, 112 and a fluidic circuit 110FC including the various fluidic pathways shown in FIGS. 2B and 2C that is configured to circulate, inject, and purge fluid and other components to and from the electrolysis systems 110. A person skilled in the art would understand that one or a variety of a number of components within the fluidic circuit 110FC, as well as more or less than two electrolyzer cell stacks 111, 112, may be utilized in the electrolysis systems 110. For example, the electrolysis systems 110 may include one electrolyzer cell stack 111, and in other examples, the electrolysis systems 110 may include three or more electrolyzer cell stacks 111, 112.

The electrolysis systems 110 may include one or more types of electrolyzer cell stacks 111, 112 therein. In the illustrated embodiment, a polymer electrolyte membrane (PEM) electrolyzer cell 180 may be utilized in the stacks 111, 112. A PEM electrolyzer cell 180 typically operates at about 4°C to about 150°C, including any specific or range of temperatures comprised therein. A PEM electrolyzer cell 180 also typically functions at about 100 bar or less, but can go up to about 1000 bar (including any specific or range of pressures comprised therein), which reduces the total energy demand of the system. A standard electrochemical reaction that occurs in a PEM electrolyzer cell 180 to produce hydrogen is as follows.
- Anode: 2H₂O → O₂ + 4H⁺ + 4e⁻
- Cathode: 4H⁺ + 4e⁻ → 2H₂
- Overall: 2H₂O (liquid) → 2H₂ + O₂

Additionally, a solid oxide electrolyzer cell 180 may be utilized in the electrolysis systems 110. A solid oxide electrolyzer cell 180 will function at about 500°C to about 1000°C, including any specific or range of temperatures comprised therein. A standard electrochemical reaction that occurs in a solid oxide electrolyzer cell 180 to produce hydrogen is as follows.
- Anode: 2O²⁻ → O₂ + 4e⁻
- Cathode: 2H₂O + 4e⁻ → 2H₂ + 2O²⁻
- Overall: 2H₂O (vapor) → 2H₂ + O₂

Moreover, an AEM electrolyzer cell 180 may utilized, which uses an alkaline media. An exemplary AEM electrolyzer cell 180 is an alkaline electrolyzer cell 180. Alkaline electrolyzer cells 180 comprise aqueous solutions, such as potassium hydroxide (KOH) and/or sodium hydroxide (NaOH), as the electrolyte. Alkaline electrolyzer cells 180 typically perform at operating temperatures ranging from about 0°C to about 150°C, including any specific or range of temperatures comprised therein. Alkaline electrolyzer cell 180 generally operate at pressures ranging from about 1 bar to about 100 bar, including any specific or range of pressures comprised therein. A typical hydrogen-generating electrochemical reaction that occurs in an alkaline electrolyzer cell 180 is as follows.
- Anode: 4OH⁻ → O₂ + 2H₂O + 4e⁻
- Cathode: 4H₂O + 4e⁻ → 2H₂ + 4OH⁻
- Overall: 2H₂O 2H₂ + O₂

As shown in FIG. 2B, the electrolyzer cell stacks 111, 112 include one or more electrolyzer cells 180 that utilize electricity to chemically produce substantially pure hydrogen and oxygen from water. In turn, the pure hydrogen produced by the electrolyzer may be utilized as a fuel or energy source. As shown in FIG. 2B, the electrolyzer cell stack 111, 112 outputs the produced hydrogen along a fluidic connecting line 113 to a hydrogen separator 116, and also outputs the produced oxygen along a fluidic connecting line 115 to an oxygen separator 114.

The hydrogen separator 116 may be configured to output pure hydrogen gas and also send additional output fluid to a hydrogen drain tank 120, which then outputs fluid to a deionized water drain 121. The oxygen separator 114 may output fluid to an oxygen drain tank 124, which in turn outputs fluid to a deionized water drain 125. A person skilled in the art would understand that certain inputs and outputs of fluid may be pure water or other fluids such as coolant or byproducts of the chemical reactions of the electrolyzer cell stacks 111, 112. For example, oxygen and hydrogen may flow away from the cell stacks 111, 112 to the respective separators 114, 116. The system 110 may further include a rectifier 132 configured to convert electricity 133 flowing to the cell stacks 111, 112 from alternating current (AC) to direct current (DC).

The deionized water drains 121, 125 each output to a deionized water tank 140, which is part of a polishing loop 136 of the fluidic circuit 110FC, as shown in FIG. 2C. Water with ion content can damage electrolyzer cell stacks 111, 112 when the ionized water interacts with internal components of the electrolyzer cell stacks 111, 112. The polishing loop 136, shown in greater detail in FIG. 2C, is configured to deionize the water such that it may be utilized in the cell stacks 111, 112 and not damage the cell stacks 111, 112.

In the illustrated embodiment, the deionized water tank 140 outputs fluid, in particular water, to a deionized water polishing pump 144. The deionized water polishing pump 144 in turn outputs the water to a water polishing heat exchanger 146 for polishing and treatment. The water then flows to a deionized water resin tank 148.

Coolant is directed through the electrolysis systems 110, in particular through a deionized water heat exchanger 172 that is fluidically connected to the oxygen separator 114. The coolant used to cool said water may also be subsequently fed to the water polishing heat exchanger 146 via a coolant input 127 for polishing. The coolant is then output back to the deionized water heat exchanger 172 for cooling the water therein.

After the water is output from the deionized water polishing heat exchanger 146 and subsequently to the deionized water resin tank 148, a portion of the water may be fed to deionized water high pressure feed pumps 160. Another portion of the water may be fed to a deionized water pressure control valve 152, as shown in FIG. 2C. The portion of the water that is fed to the deionized water pressure control valve 152 flows through a recirculation fluidic connection 154 that allows the water to flow back to the deionized water tank 140 for continued polishing.

In some embodiments, the electrolysis systems 110 may increase deionized water skid for polishing water flow to flush out ions within the water at a faster rate. The portion of the water that is fed to the deionized water high pressure feed pumps 160 is then output to a deionized water feed 164, which then flows into the oxygen separator 114 for recirculation and eventual reusage in the electrolyzer cell stacks 111, 112. This process may then continuously repeat.

The electrolysis systems 110 described herein may be used in stationary and/or immovable power systems, such as industrial applications and power generation plants. The electrolysis systems 110 may also be implemented in conjunction with other electrolysis systems 110.

The present electrolysis systems 110 may be comprised in mobile applications. The electrolysis systems 110 may be in the vehicle or the powertrain 100. The vehicle or powertrain 100 comprising the electrolysis systems 110 may be an automobile, a pass car, a bus, a truck, a train, a locomotive, an aircraft, a light duty vehicle, a medium duty vehicle, or a heavy-duty vehicle.

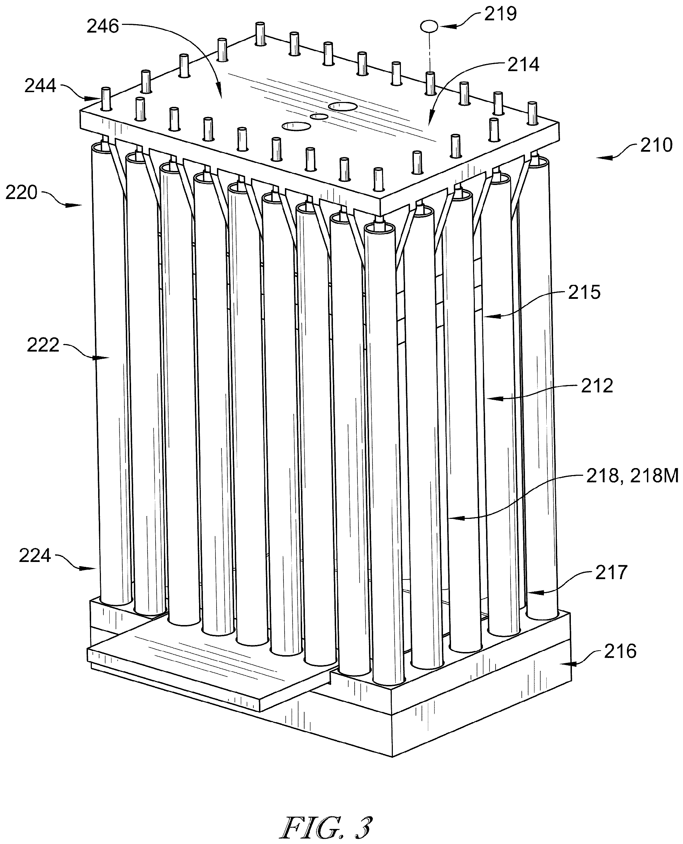

The present disclosure provides an electrochemical system 210 including an electrochemical stack 212, a top endplate 214, and a bottom endplate 216, as shown in FIG. 3. The electrochemical stack 212 may be the fuel cell stack 12 or the electrolyzer cell stack 111, 112 as described above. The top endplate 214 is located on a first side 215 of the electrochemical stack 212. The bottom endplate 216 is located on a second side 217 of the electrochemical stack 212 opposite the first side 215.

The electrochemical stack 212 includes a plurality of cells 218, as shown in FIG. 3. The number of cells 218, such as the fuel cells 20 and/or the electrolyzer cells 180, in the electrochemical stack 212 may be any number. For example, the number of cells 218 in the electrochemical stack 212 may range from about 100 cells to about 1000 cells, including any specific number or range of number of cells 218 comprised therein. Each of the plurality of cells 218 includes a membrane 218M, such as the MEA 22 or the electrolyte 181E, as described above.

The membranes 218M of each of the plurality of cells 218 are exposed to water and heat. With this exposure, the membranes 218M expand. Thus, a tie rod spring assembly 220 is included in the electrochemical system 210 to allow for this expansion of the membranes 218M. Allowing for this expansion, as opposed to preventing or minimizing the expansion, enhances the reliability and performance of the electrochemical stack 212.

In traditional electrochemical systems, a small washer stack having a height of about 120 millimeters is located on top of the top endplate. The small washer stack does not allow for the necessary expansion of the membranes. To allow for adequate swelling and expansion of the membranes, the washer stack needs to be increased in height. However, there is not enough space above the top endplate to allow for a taller washer stack. In these traditional electrochemical systems, not allowing for adequate swelling and expansion of the membranes leads to high internal cell pressure, which may lead to premature damage to the membranes and failure of the electrochemical stack.

As shown in FIG. 3, the tie rod spring assembly 220 is located between the top endplate 214 and the bottom endplate 216 thereby allowing for adequate expansion and swelling of the membranes 218M during use of the electrochemical stack 212. The tie rod spring assembly 220 includes a plurality of tie rods 222, as shown in FIG. 3. The plurality of tie rods 222 extends vertically between the top endplate 214 and the bottom endplate 216. Each of the plurality of tie rods 222 is spaced apart from one another around a perimeter 224 of the electrochemical stack 212, as shown in FIG. 3. The spacing and/or location between each of the plurality of tie rods 222 around the perimeter 224 may be the same and/or different. The tie rod spring assembly 220 may include any number of tie rods 222, for example, between about one (1) and about forty-eight (48) tie rods 222, including any specific number or range of numbers comprised therein. In an exemplary embodiment, as shown in FIG. 3, the tie rod spring assembly 220 includes about twenty-four (24) tie rods 222.

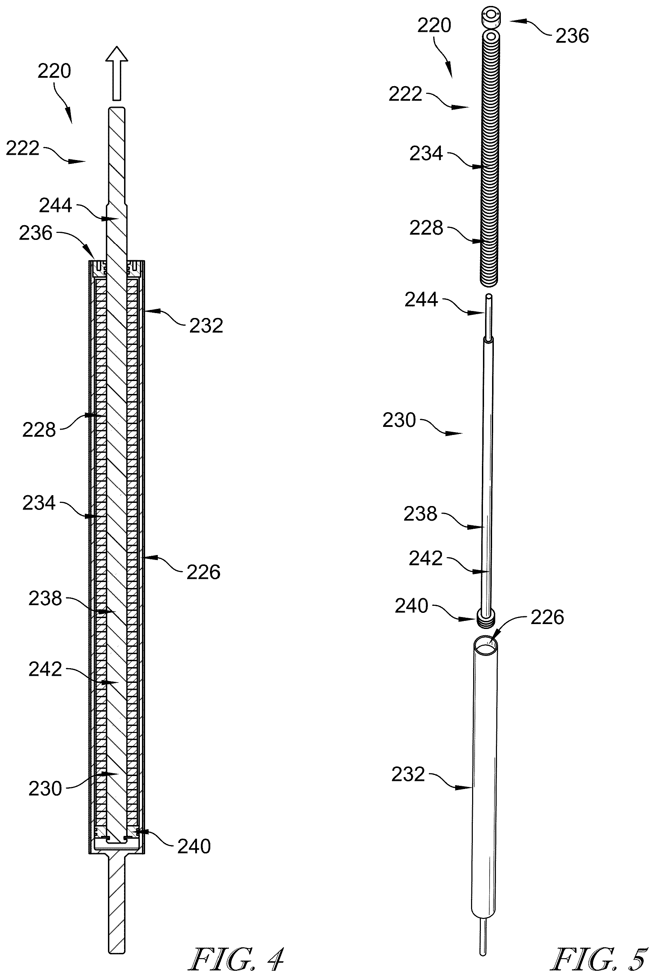

Each tie rod 222 includes a housing 226, a washer stack 228, and a plunger 230, as shown in FIGS. 4 and 5. The housing 226 extends between the top endplate 214 and the bottom endplate 216. The washer stack 228 is located within the housing, as shown in FIG. 4. The plunger 230 extends through the washer stack 228 within the housing 226. As the membranes 218M expand, the top endplate 214 and the plunger 230 move away from the bottom endplate 216 to compress the washer stack 228 within the housing 226. A movement of the top endplate 214 away from the bottom endplate 216 may be a vertical movement or a horizontal movement.

The housing 226 is fixed to the bottom endplate 216 such that the housing 226 remains stationary relative to the top endplate 214 and the plunger 230 as the membranes 218M expand. As shown in FIGS. 4-6, a lower end of the housing 226 extends into the bottom endplate 216. An upper end of the housing 226 opposite the lower end is located below the top endplate 214.

In some embodiments, each tie rod 222 further includes an insulative sleeve 232, as shown in FIGS. 3-5. The insulative sleeve 232 extends around the housing 226 to insulate the housing 226 and/or the components located therein from water intrusion and corrosion. The insulative sleeve 232 remains stationary and does not move with the top endplate 214 or the plunger 230.

The washer stack 228 is located entirely between the top endplate 214 and the bottom endplate 216, as shown in FIG. 3. In this way, as compared to traditional electrochemical systems, a taller washer stack 228 may be used as compared to traditional washer stacks that are located above the top endplate. The taller washer stack 228 may have a height that is at or greater than about 250 millimeters.

The washer stack 228 includes a plurality of washers 234 stacked on top of one another. In some embodiments, the plurality of washers 234 is disc spring washers. In some embodiments, the plurality of washers 234 is conical spring washers. In some embodiments, the plurality of washers 234 is wave spring washers. In some embodiments, the plurality of washers 234 is Belville washers. In some embodiments, the plurality of washers 234 is coil spring washers. In some embodiments, the plurality of washers 234 is split-ring spring washers. In some embodiments, the plurality of washers 234 is split-straight spring washers. In some embodiments, the plurality of washers 234 is curved spring washers. In some embodiments, the plurality of washers 234 is rubber-backed washers. In some embodiments, the plurality of washers 234 is a combination of any of the following: disc spring washers, conical spring washers, wave spring washers, Belville washers, coil spring washers, split-ring spring washers, split-straight spring washers, curved spring washers, and/or rubber-backed washers.

As an example, and as known in the art, disc spring washers are circular discs with a domed or concave shape. When compressed, the disc spring washers flatten out thereby creating a spring-like force.

The plurality of washers 234 may include any number of washers 234. For example, the plurality of washers 234 may include between about 50 and about 1,000 washers 234, including any specific number or range of numbers comprised therein. The design of the washer stack 228, including the washer type selection, quantity of washers 234, and/or orientation of washers 234, is dependent on the thickness of the washers 234, the size (i.e., height) of the electrochemical stack 212, the number of cells 218 within the electrochemical stack 212, the amount of expansion of the membranes 218M, the thickness of components in the cells 218, the thermal expansion properties of components in the cells 218, a desired membrane 218M compression, the method of tie rod tension application, along with other factors.

In some embodiments, each tie rod 222 further includes a washer stack retainer 236, as shown in FIGS. 4 and 5. The washer stack retainer 236 is located within the housing 226 above the washer stack 228 to engage an upper surface of the washer stack 228. The washer stack retainer 236 is fixed to the housing 226 such that the washer stack retainer 236 remains stationary relative to the housing 226 and the bottom endplate 216 as the top endplate 214 and the plunger 230 move.

The plunger 230 moves within the housing 226 with the top endplate 214, as suggested in FIG. 4. The plunger 230 includes a stem 238 and a flange 240, as shown in FIGS. 4 and 5. The stem 238 of the plunger 230 extends through the washer stack 228 and through the washer stack retainer 236, as suggested in FIG. 5. The flange 240 of the plunger 230 is coupled to a terminal end of the stem 238 and located within the housing 226.

The stem 238 of the plunger 230 includes a first portion 242 coupled to the flange 240 and a second portion 244 coupled to the first portion 242 to locate the first portion 242 between the flange 240 and the second portion 244, as shown in FIGS. 4 and 5. The first portion 242 extends through the washer stack 228 and the washer stack retainer 236. The second portion 244 extends outwardly beyond the housing 226 and the insulative sleeve 232 to extend through the top endplate 214, as shown in FIG. 3. The second portion 244 of the stem 238 is fixed with the top endplate 214 so that the plunger 230 moves with the top endplate 214.

In some embodiments, a fastener 219 couples the second portion 244 of the stem 238 to the top endplate 214. The fastener 219 may be, for example, a nut. In such an embodiment, the nut is threaded onto the second portion 244 of the stem 238 above the top endplate 214 to couple the plunger 230 to the top endplate 214. In other embodiments, the fastener 219 may be any device or component capable of coupling the plunger 230 to the top endplate 214.

The flange 240 of the plunger 230 is located below the washer stack 228 to engage a lower surface of the washer stack 228, as shown in FIGS. 4 and 5. The washer stack 228 is located between and contacting the flange 240 and the washer stack retainer 236. As the membranes 218M expand, the top endplate 214 moves away from the bottom endplate 216, which causes the plunger 230 to move with the top endplate 214. As the plunger 230 moves, the flange 240 of the plunger 230 applies a compressive force to the washer stack 228. The washer stack 228 then compresses between the flange 240 and the washer stack retainer 236. The washer stack retainer 236 maintains a position of the washer stack 228 relative to the plunger 230. Load from the compression of the washer stack 228 is transferred to the housing 226 and then to the bottom endplate 216.

The tie rod spring assembly 220 allows for the use of a relatively tall washer stack 228 by relocating the washer stack 228 in parallel with the electrochemical stack 212. The tie rod spring assembly 220 takes advantage of the existing electrochemical stack 212 height, without requiring the electrochemical stack 212 height to be adjusted. The tie rod spring assembly 220 minimizes any increase in electrochemical system 210 size, minimizes tie rod 222 tension increase, and allows cell-to-cell 218 expansion to maintain electrochemical stack 212 reliability. In some embodiments, the tie rod spring assembly 220 allows for at least about 8 millimeters of total expansion for the membranes 218M.

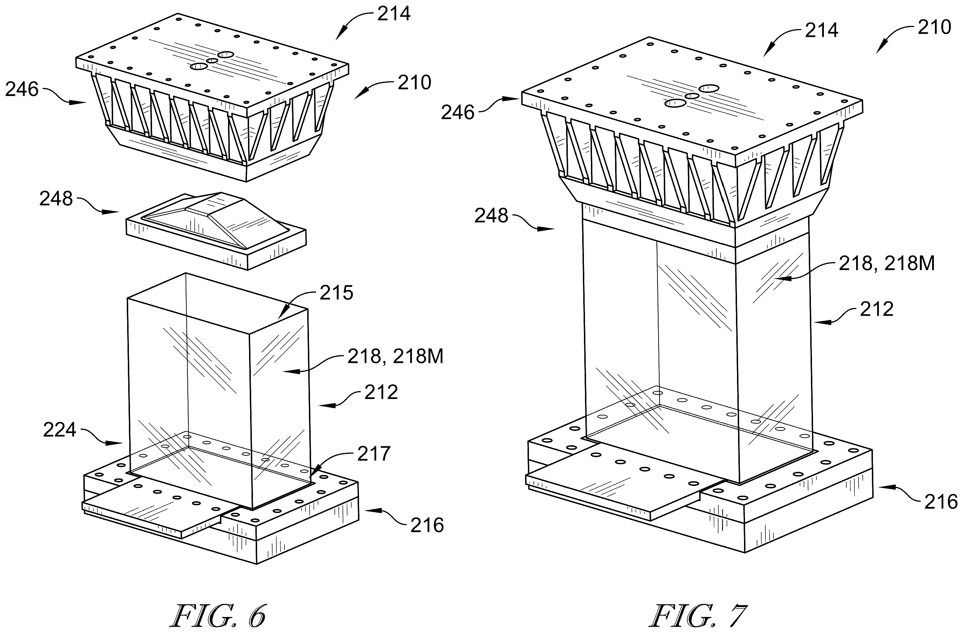

As shown in FIGS. 6 and 7, in some embodiments, the top endplate 214 includes an upper crown 246 and a lower cap 248. The upper crown 246 is located above the lower cap 248. The second portion 244 of the stem 238 of the plunger 230 is coupled to and extends through the upper crown 246, as shown in FIG. 3. The lower cap 248 is coupled between the upper crown 246 and the first side 215 of the electrochemical stack 212. The upper crown 246 adds height to the electrochemical system 210 without increasing the height of the electrochemical stack 212 thereby allowing for the use of the taller washer stack 228. In some embodiments, the upper crown 246 adds a height of about 75 millimeters or more to the electrochemical system 210 thereby allowing for the use of the taller washer stack 228. The lower cap 248 directs fluid therethrough for the electrochemical stack 212. In this way, the upper crown 246 does not contact fluid of the electrochemical system 210.

In some embodiments, the upper crown 246 and the lower cap 248 are formed of different materials based, at least in part, on the fluid flow. For example, the upper crown 246 may be formed of carbon steel and the lower cap 248 may be formed of a non-corrosive material. In some embodiments the non-corrosive material is stainless steel.

In some embodiments, the electrochemical system 210 is not increased in height as compared to a traditional electrochemical system. In other words, in some embodiments, the upper crown 246 does not add height to the electrochemical system 210.

In some embodiments, the plunger 230 is stationary and the housing 226 is coupled with the top endplate 214 to move with the top endplate 214. In such an embodiment, the plunger 230 is fixed to the bottom endplate 216, and the housing 226 is fixed to the top endplate 214. Movement of the top endplate 214 and the housing 226 away from the bottom endplate 216 compresses the washer stack 228 between the flange 240 of the plunger 230 and the washer stack retainer 236 as the washer stack retainer 236 moves with the housing 226.

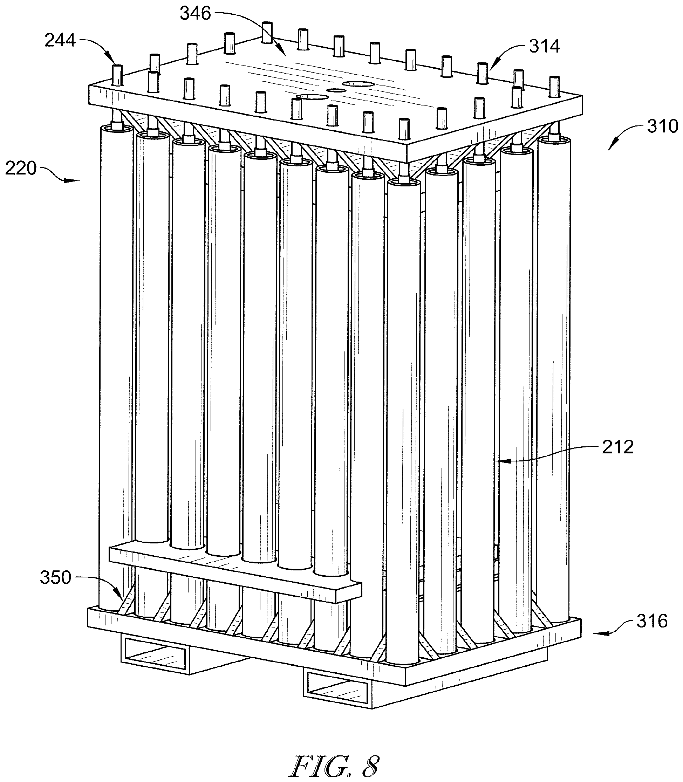

Another embodiment of an electrochemical system 310 is provided herein. As compared to the electrochemical system 210, the electrochemical system 310 includes a different top endplate 314 and a different bottom endplate 316, as shown in FIGS. 8-10. Other components of the electrochemical system 210 and the electrochemical system 310 are relatively similar or the same, unless indicated otherwise.

With reference to the electrochemical system 310, the top endplate 314 is located on the first side 215 of the electrochemical stack 212. The bottom endplate 316 is located on the second side 217 of the electrochemical stack 212 opposite the first side 215.

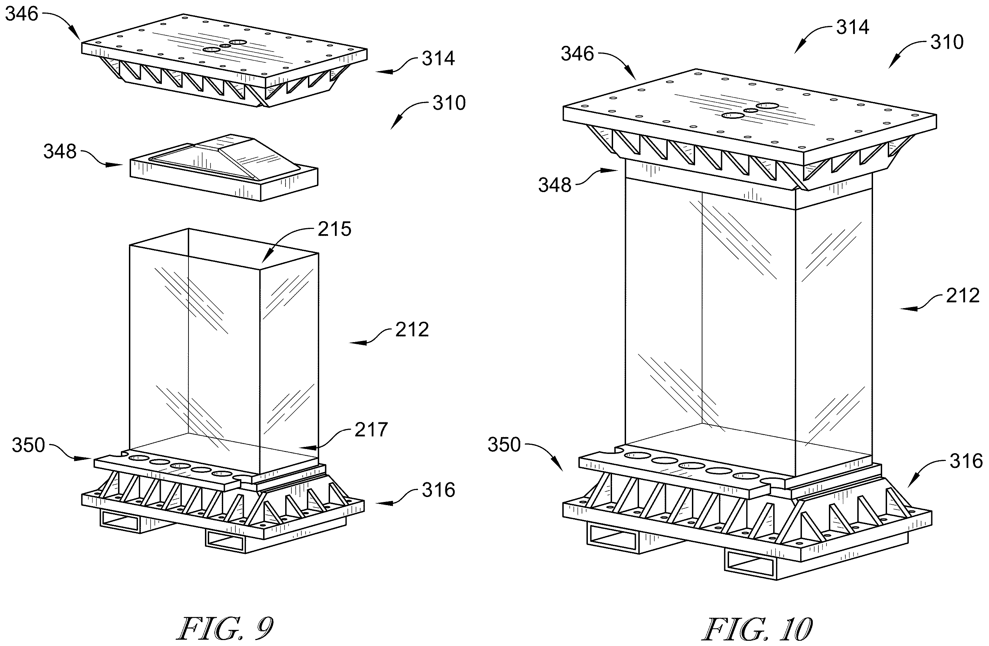

As shown in FIG. 8, the tie rod spring assembly 220 is located between the top endplate 314 and the bottom endplate 316 thereby allowing for adequate expansion and swelling of the membranes 218M during use of the electrochemical stack 212. The housing 226 of each tie rod 222 is fixed to the bottom endplate 316 such that the housing 226 remains stationary relative to the top endplate 314 and the plunger 230 as the membranes 218M expand. As shown in FIGS. 8 and 9, a lower end of the housing 226 extends into the bottom endplate 316. An upper end of the housing 226 opposite the lower end is located below the top endplate 314.

The washer stack 228 is located entirely between the top endplate 314 and the bottom endplate 316, as shown in FIG. 8. The second portion 244 of the stem 238 extends outwardly beyond the housing 226 to extend through the top endplate 314, as shown in FIG. 8. The second portion 244 of the stem 238 is fixed with the top endplate 314 so that the plunger 230 moves with the top endplate 314. In some embodiments, the fastener (not shown) couples the second portion 244 of the stem 238 to the top endplate 314.

As shown in FIGS. 9 and 10, in some embodiments, the top endplate 314 includes an upper crown 346 and a lower cap 348. The upper crown 346 is located above the lower cap 348. The second portion 244 of the stem 238 of the plunger 230 is coupled to and extends through the upper crown 346, as shown in FIG. 8. The lower cap 348 is coupled between the upper crown 346 and the first side 215 of the electrochemical stack 212.

The upper crown 346 adds height to the electrochemical system 310 without increasing the height of the electrochemical stack 212 thereby allowing for the use of the taller washer stack 228. The lower cap 348 directs fluid therethrough for the electrochemical stack 212. In this way, the upper crown 346 does not contact fluid of the electrochemical system 310. In some embodiments, the upper crown 346 and the lower cap 348 are formed of different materials based, at least in part, on the fluid flow. For example, the upper crown 346 may be formed of carbon steel and the lower cap 348 may be formed of a non-corrosive material. In some embodiments, the non-corrosive material is stainless steel.

In some embodiments, the electrochemical system 310 is not increased in height as compared to traditional electrochemical systems. In other words, in some embodiments, the upper crown 346 does not add height to the electrochemical system 310.

As shown in FIGS. 9 and 10, in some embodiments, the bottom endplate 316 includes a lower crown 350. In this way, the lower crown 350 helps to add height to the electrochemical system 310 in addition to the upper crown 346 adding height. As compared to the electrochemical system 210, the upper crown 346 and the lower crown 350 cooperate to add height to the electrochemical system 310 as opposed to the upper crown 246 of the electrochemical system 210 alone. In some embodiments, the upper crown 346 and the lower crown 350 cooperate to add a height of about 75 millimeters or more to the electrochemical system 310 thereby allowing for the use of the taller washer stack 228.

The following described aspects of the present invention are contemplated and nonlimiting:
A first aspect of the present invention relates to electrochemical system. The electrochemical system includes an electrochemical stack including a plurality of cells, a top endplate, a bottom endplate, and a tie rod spring assembly. Each of the plurality of cells includes a membrane. The top endplate is arranged on a first side of the electrochemical stack. The bottom endplate is arranged on a second side of the electrochemical stack opposite the first side. The tie rod spring assembly is configured to allow the membrane of each of the plurality of cells to expand during use of the electrochemical stack. The tie rod spring assembly includes a housing extending between the bottom endplate and the top endplate, a washer stack arranged within the housing, and a plunger extending through the washer stack and configured to compress the washer stack within the housing in response to movement of the top endplate away from the bottom endplate due to the membrane of each one or more of the plurality of cells expanding.

A second aspect of the present invention relates to a method. The method includes arranging an electrochemical stack between a top endplate and a bottom endplate, inserting a plunger of a tie rod spring assembly through a washer stack of the tie rod spring assembly, positioning the washer stack and the plunger within a housing of the tie rod spring assembly, arranging the tie rod spring assembly between the top endplate and the bottom endplate, moving the top endplate away from the bottom endplate in response to expansion of one or more components of the electrochemical stack, and compressing the washer stack within the housing in response to movement of the top endplate.

In the first aspect of the present invention, the washer stack may be located entirely between the top endplate and the bottom endplate. In the first aspect of the present invention, the washer stack may include a plurality of disc spring washers.

In the first aspect of the present invention, the housing may be fixed to the bottom endplate such that the housing remains stationary relative to the top endplate. In the first aspect of the present invention, the plunger may be configured to move with the top endplate away from the bottom endplate. In the first aspect of the present invention, the plunger may include a stem that extends through the washer stack and a flange coupled to a terminal end of the stem and located within the housing. In the first aspect of the present invention, the flange may be located below the washer stack to engage a lower surface of the washer stack.

In the first aspect of the present invention, the tie rod spring assembly may further include a washer stack retainer located within the housing above the washer stack to engage an upper surface of the washer stack opposite the lower surface. In the first aspect of the present invention, the flange of the plunger may apply a compressive force to the washer stack in response to the plunger moving with the top endplate relative to the bottom endplate.

In the first aspect of the present invention, the washer stack retainer may be fixed to the housing.

In the first aspect of the present invention, the stem of the plunger may include a first portion coupled to the flange and a second portion coupled to the first portion to locate the first portion between the flange and the second portion. In the first aspect of the present invention, the first portion may extend through the washer stack and the washer stack retainer and the second portion may extend outwardly beyond the housing to couple with the top endplate. In the first aspect of the present invention, the tie rod spring assembly may further include an insulative sleeve extending around the housing.

In the second aspect of the present invention, the washer stack may be located entirely between the top endplate and the bottom endplate. In the second aspect of the present invention, the method may further comprise fixing the housing to the bottom endplate.

In the second aspect of the present invention, the step of moving the top endplate may include moving the plunger with the top endplate relative to the bottom endplate. In the second aspect of the present invention, the plunger may include a stem that extends through the washer stack and a flange coupled to a terminal end of the stem and located within the housing.

In the second aspect of the present invention, the method may further comprise locating the flange of the plunger below a lower surface of the washer stack and applying a compressive force to the lower surface of the washer stack via the flange in response to the movement of the plunger.

In the second aspect of the present invention, the method may further comprise fixing the stem of the plunger to the top endplate. In the second aspect of the present invention, the method may further comprise fixing a washer stack retainer to the housing above the washer stack. In the second aspect of the present invention, the method may further comprise inserting the housing into an insulative sleeve. In the second aspect of the present invention, the washer stack may include a plurality of disc spring washers.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially of, or consist of all the numerical values, units, measurements, and/or ranges including or within those ranges and/or endpoints, whether those numerical values, units, measurements, and/or ranges are explicitly specified in the present disclosure or not.

Unless defined otherwise, technical, and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of" refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. An electrochemical system comprising:
an electrochemical stack including a plurality of cells, each of the plurality of cells including a membrane,
a top endplate arranged on a first side of the electrochemical stack,
a bottom endplate arranged on a second side of the electrochemical stack opposite the first side, and
a tie rod spring assembly configured to allow the membrane of each of the plurality of cells to expand during use of the electrochemical stack, the tie rod spring assembly including a housing extending between the bottom endplate and the top endplate, a washer stack arranged within the housing, and a plunger extending through the washer stack and configured to compress the washer stack within the housing in response to movement of the top endplate away from the bottom endplate due to the membrane of one or more of the plurality of cells expanding.

2. The electrochemical system of claim 1, wherein the washer stack is located entirely between the top endplate and the bottom endplate.

3. The electrochemical system of claim 1 or 2, wherein the washer stack includes a plurality of disc spring washers.

4. The electrochemical system of claim 1, 2 or 3, wherein the housing is fixed to the bottom endplate such that the housing remains stationary relative to the top endplate.

5. The electrochemical system of any preceding claim, wherein the plunger is configured to move with the top endplate away from the bottom endplate, the plunger including a stem that extends through the washer stack and a flange coupled to a terminal end of the stem and located within the housing.

6. The electrochemical system of claim 5, wherein the flange is located below the washer stack to engage a lower surface of the washer stack.

7. The electrochemical system of claim 6, wherein the tie rod spring assembly further includes a washer stack retainer located within the housing above the washer stack to engage an upper surface of the washer stack opposite the lower surface; optionally wherein the flange of the plunger applies a compressive force to the washer stack in response to the plunger moving with the top endplate relative to the bottom endplate.

8. The electrochemical system of claim 7, wherein:
(i) the washer stack retainer is fixed to the housing; and/or
(ii) the stem of the plunger includes a first portion coupled to the flange and a second portion coupled to the first portion to locate the first portion between the flange and the second portion, the first portion extending through the washer stack and the washer stack retainer and the second portion extending outwardly beyond the housing to couple with the top endplate.

9. The electrochemical system of any preceding claim, wherein the tie rod spring assembly further includes an insulative sleeve extending around the housing.

10. A method comprising:
arranging an electrochemical stack between a top endplate and a bottom endplate,
inserting a plunger of a tie rod spring assembly through a washer stack of the tie rod spring assembly,
positioning the washer stack and the plunger within a housing of the tie rod spring assembly,
arranging the tie rod spring assembly between the top endplate and the bottom endplate,
moving the top endplate away from the bottom endplate in response to expansion of one or more components of the electrochemical stack, and
compressing the washer stack within the housing in response to movement of the top endplate.

11. The method of claim 10, wherein the washer stack is located entirely between the top endplate and the bottom endplate.

12. The method of claim 10 or 11, further comprising fixing the housing to the bottom endplate.

13. The method of claim 10, 11 or 12, wherein the step of moving the top endplate includes moving the plunger with the top endplate relative to the bottom endplate, and wherein the plunger includes a stem that extends through the washer stack and a flange coupled to a terminal end of the stem and located within the housing.

14. The method of claim 13, further comprising:
(i) locating the flange of the plunger below a lower surface of the washer stack and applying a compressive force to the lower surface of the washer stack via the flange in response to the movement of the plunger; and/or
(ii) fixing the stem of the plunger to the top endplate.

15. The method of any of claims 10 to 14, wherein:
(i) the method further comprises fixing a washer stack retainer to the housing above the washer stack; and/or
(ii) the method further comprises inserting the housing into an insulative sleeve; and/or
(iii) the washer stack includes a plurality of disc spring washers.
